Europäisches Patentamt

European Patent Office

Office européen des brevets

(11) Publication number: 0 294 052
A2

## (12) EUROPEAN PATENT APPLICATION

(21) Application number: 88304368.9

(22) Date of filing: 13.05.88

(51) Int. Cl.⁴ C10G 47/36 , B01J 19/00

(30) Priority: 02.06.87 US 57591

(43) Date of publication of application:
07.12.88 Bulletin 88/49

(84) Designated Contracting States:
DE ES FR GB IT

(71) Applicant: THE BABCOCK & WILCOX
COMPANY
1010 Common Street P.O. Box 60035
New Orleans Louisiana 70160(US)

(72) Inventor: Cygnarowicz, Robert M.
762 Alpine Avenue
Boulder Colorado 80302(US)
Inventor: Patella, Joseph G.
10217 Hoos Road
Mentor Ohio 44060(US)

(74) Representative: Cotter, Ivan John et al
D. YOUNG & CO. 10 Staple Inn
London WC1V 7RD(GB)

(54) Autoacceleration control for exothermic reactors.

(57) In an autoacceleration control system and meth-
od for an exothermic reactor such as a catalytic
hydrocracker (6), a signal predicting the reaction
temperature is generated by means of a reactor
model and the rate of application of a corrective
agent (fuel gas; coolant) is adjusted (CV01; CV02) so
as thereby to inhibit autoacceleration of the
hydrocracker (6).

FIG. I
REACTOR FLOWSHEET

EP 0 294 052 A2

## AUTOACCELERATION CONTROL FOR EXOTHERMIC REACTORS

This invention relates to autoacceleration control for exothermic reactors, for example autoacceleration control for catalytic hydrocrackers wherein heavy hydrocarbon fractions are converted to lighter, more valuable components.

While cracking is endothermic, the hydrogenation is exothermic and the process is overall exothermic. Since reaction rate increases exponentially with temperature, the process has the potential to autoaccelerate or run away with deletirious affects. It is therefore of extreme importance that exothermic reactors be provided with control means inhibiting the chain reaction from producing excessive reaction rates and temperatures.

At this time, reactor cooling is based directly on current process data. The deficiency in this approach is that the potential for autoacceleration is detected only when reactor temperatures are already at high values. The later that autoacceleration is detected, the higher is the likelihood of an actual runaway because: (1) the time available for operator action is reduced; and/or (2) the rate of increase in reaction rate is higher.

According to an aspect of the invention there is provided an autoacceleration control system for an exothermic reactor, the system comprising means for generating a signal predicting reaction temperature and means under the control of said signal for adjusting the rate of application of a corrective agent to inhibit the exothermic process from producing excessive reactor temperature.

According to another aspect of the invention there is provided a method of controlling temperature autoacceleration in an exothermic reactor, which method includes computing a predicted reactor temperature from feedstock flows, temperatures and pressures, generating a signal corresponding to the predicted reactor temperature, and adjusting the rate of application of a corrective agent in accordance with changes in said signal.

According to a further aspect of the invention, a mathematical model of an exothermic process is used to generate a control signal for adjusting the rate of application of a corrective agent to inhibit the exothermic process from producing excessive reactor temperatures.

The invention will now be further described, by way of illustrative and non-limiting example, with reference to the accompanying drawings, in which:

Figure 1 is a schematic view of a typical catalytic hydrocracker process;

Figure 1A shows a model for a hydrocracker having continuous stirred tank reactors (CSTRs) arranged in series; and

Figure 2 (which is constituted by arranging Figures 2A and 2B side-by-side with Figure 2A on the left) is a control diagram of a reactor model for generating control signals and illustrating a typical application of such signals in the control of a hydrocracker.

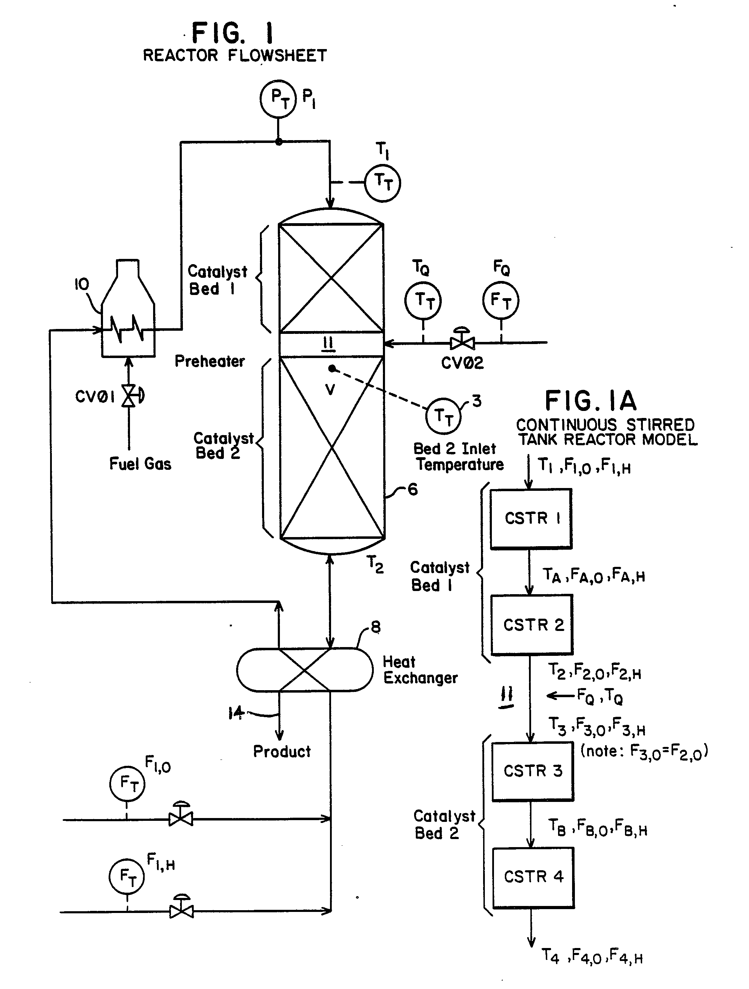

Figure 1 shows a typical catalytic hydrocracker process. A mixture of hydrocarbons F1,O and hydrogen F1,H, supplied via respective valves, forms a feedstock which, after passing through a heat exchanger 8 and a preheater 10 (the rate of flow of a fuel gas to the preheater 10 being adjustable by means of a control valve CV01) discharges into a hydrocracker 6. Disposed in series within the hydrocracker 6, as shown in a model thereof represented in Figure 1A, are a plurality of continuous stirred tank reactors (CSTRs). The CTSRs, identified in Figure 1A as CSTR1, CSTR2, CSTR3 and CSTR4, convert heavy hydrocarbon fractions in the feedstock to lighter, more valuable components. Effluent leaving the hydrocracker 6, after passing through the heat exchanger 8, is discharged through a conduit 14 for further processing. A coolant, such as hydrogen, is introduced into a so-called quench zone 11 between CSTR2 and CSTR3. The rate of flow of the coolant can be adjusted by a control valve CV02.

Various flow, temperature and pressure transmitters ($F_T$, $T_T$, $P_T$) are arranged where shown to measure flow, temperature and pressure at various points in the process.

Under ordinary conditions the rate of flow of fuel gas to the preheater 10 is controlled by means of the valve CV01 to maintain a predetermined temperature of the feedstock discharged into the hydrocracker 6. However, a control system embodying the invention may provide that, upon a predicted temperature in CSTR2 approaching a predetermined critical value, the rate of fuel flow is reduced. Thus, control of the rate of flow of fuel gas to the preheater 10 is one form of a corrective agent which can be employed to inhibit autoacceleration of the hydrocracker 6. Similarly, under ordinary conditions, the rate of flow of coolant to the quench zone 11 is controlled by means of the valve CV02 to maintain a predetermined temperature of the throughput at the inlet to CSTR3. The control system embodying the invention may provide that, upon a predicted temperature in CSTR4 approaching a predetermined critical value, the flow of coolant is increased. Thus, control of the rate of coolant flow into the quench zone 11 is another form of a corrective agent which can be employed to inhibit autoacceleration of the hydrocracker.

Referring now to Figure 1A, each of two catalyst beds (bed 1 and bed 2) of the hydrocracker 6 is modelled as two continuous CSTRs in series. Heat balance incorporating reaction kinetics is carried out over each CSTR to calculate the respective temperatures of the CTSRs. The temperature of the second CSTR for each bed model is the calculated bed outlet temperature.

Equations for the model shown in Figure 1A are presented below. Equation (1) below estimates the reaction rate (moles of hydrogen consumed) in CSTR1 with an Arrhenius expression. The reaction rate is a function of hydrogen partial pressure, but knowledge of reactor vapour composition is not usually available. Therefore, total pressure is used, which has the same net effect.

The reaction rate is CSTR1 is given by:

$$r_1 = ahk_1 Pm_1 EXP(-E_a/RT_A)/N_1 \quad (1),$$

where:

$r_1$ = reaction rate, CSTR1;
$a$ = catalyst activity;
$h$ = feed reactivity;
$k_1$ = reaction rate constant, bed 1;
$P$ = reactor pressure;
$m_1$ = mass fraction of catalyst in bed 1;
$N_1$ = number of CSTRs modelling bed 1;
$E_a$ = activation energy;
$R$ = gas constant; and
$T_A$ = temperature of CSTR1.

The temperature $T_A$ of CSTR1 is calculated by Equation (2) below. Therefore, the value of $T_A$ used in Equation (1) will be the last calculated value for $T_A$. For a first iteration (i.e. model initialisation), $T_A$ is set equal to the reactor inlet temperature $T_1$. Equation (1) contains two "tunable" parameters, namely catalyst activity and feed reactivity. Catalyst activity is a function of the amount of oil processed. Feed reactivity is a function of feedstock composition and the degree of feed hydrotreating. Equation (2) incorporates the result of Equation (1) in a heat balance around CSTR1 to calculate the temperature of CSTR1.

Thus, the temperature $T_A$ of CSTR1 is given by:

$$T_A = T_1 + f_1 r_1 Hrxn/(F_{1,0} C_o + F_{1,H} C_H) \quad (2),$$

where:

$T_A$ = temperature of CSTR1;
$T_1$ = reactor inlet temperature;
$f_1$ = fraction of reaction heat as sensible heat;
$Hrxn$ = heat of reaction;
$F_{1,0}$ = hydrocarbon feed flow;
$C_o$ = hydrocarbon heat capacity;
$F_{1,H}$ = reactor inlet hydrogen flow; and
$C_H$ = hydrogen heat capacity.

As the hydrocracking reaction proceeds, the hydrocarbon volumetric flow increases and hydrogen is consumed. Equations (3) and (4) below enable calculation of the new flows entering CSTR2 based on these volume changes:

$$F_{A,0} = F_{1,0} + C' \cdot r_1 \quad (3), and$$
$$F_{A,H} = F_{1,H} - C'' \cdot r_1 \quad (4),$$

where:

$F_{A,0}$ = hydrocarbon flow to CSTR2;
$C'$ = hydrocarbon volume change with reaction;
$F_{A,H}$ = hydrocarbon flow to CSTR2; and
$C''$ = hydrogen volume change with reaction.

Based on the temperature calculation in Equation (2) and the flow calculations in Equations (3) and (4), a reaction rate and temperature for CSTR2 are estimated in accordance with Equations (5) and (6) below, respectively:

$$r_2 = ahk_1 Pm_1 EXP(-Ea/RT_2)/N_1 \quad (5), and$$
$$T_2 = T_A + f_1 r_2 Hrxn/(F_{A,0} C_o + F_{A,H} C_H) \quad (6),$$

where:

$r_2$ = reaction rate, CSTR2; and
$T_2$ = temperature of CSTR2, or predicted bed 1 outlet temperature.

As with CSTR1, the CSTR2 reaction rate calculation uses the value of $T_2$ from the last computation of Equation (6). The result of Equation (5) is then used in Equation (6) to update $T_2$. The value of $T_2$ used in the initial calculation of $r_2$ is the first calculation result for $T_A$, the temperature of CSTR1.

The volume changes in the hydrocarbon and hydrogen flows due to cracking and hydrogeneration in CSTR2 are given by Equations (7) and (8) below, respectively:

$$F_{2,0} = F_{A,0} + C' \cdot r_2 \quad (7), and$$
$$F_{2,H} = F_{A,H} - C'' \cdot r_2 \quad (8),$$

where:

$F_{2,0}$ = hydrocarbon flow to quench zone; and
$F_{2,H}$ = hydrogen flow to quench zone (from bed 1).

The calculations presented in Equations (1) to (6) are repeated for the second bed once the inlet flows and temperature to CSTR3 are determined. This is accomplished by mass and energy balances around the quench zone. The results of these balances are given in Equations (9), (10), and (11) below.

Thus, the quench zone temperature is given by:

$$T_3 = (F_{2,0} C_o T_2 + C_H(F_{2,H} T_2 + F_Q T_Q) + f_2 F_Q H_v)/(F_{2,0} C_o + F_{2,H} C_H + F_Q C_H) \quad (9),$$

where:

$T_3$ = quench zone temperature;
$T_Q$ = temperature of hydrogen quench;
$f_2$ = volume of hydrocarbon vapours condensing per volume of quench;
$F_Q$ = flow of hydrogen quench; and
$H_v$ = hydrocarbon heat of condensation.

A heat generation term, $f_2 F_Q H_v$, is included in Equation (9) for the heat released from condensing hydrocarbon vapours. The model assumes that condensation is in proportion to the quench flow. The quench zone mass balances show that:

$$F_{3,0} = F_{2,0} \quad (10) \text{ and}$$
$$F_{3,H} = F_{2,H} + F_Q \quad (11),$$

where:

$F_{3,0}$ = hydrogen flow to CSTR3, and

$F_{3,H}$ = hydrogen flow to CSTR3.

The volumetric hydrocarbon flow to CSTR3 is equal to the hydrocarbon flow $F_{2,H}$ to the quench zone. Equation (10) is included for notational consistency. Equations (12) to (17) below enable calculation of the reactor outlet temperature in the same manner as the bed 1 outlet temperature was determined.

Thus, the reaction rate in CSTR3 is given by

$$r_3 = ahk_2 Pm_2 EXP(-E_a/RT_B)/N_2 \quad (12),$$

where:

$r_3$ = reaction rate, CSTR3;

$T_B$ = temperature of CSTR3;

$m_2$ = mass fraction of catalyst in bed 2;

$N_2$ = number of CSTRs modelling bed 2; and

$k_2$ = reaction rate constant, bed 2.

The temperature $T_B$ of CSTR3 is given by:

$$T_B = T_3 + f_1 r_3 Hrxn/(F_{3,0} C_0 + F_{3,H} C_H) \quad - \quad (13).$$

The volumetric flow to CSTR4 is calculated by the following equations:

$$F_{4,0} = F_{3,0} + C' * r_3 \quad (14), \text{ and}$$
$$F_{4,H} = F_{3,H} - C'' * r_3 \quad (15),$$

where:

$F_{4,0}$ = hydrocarbon flow to CSTR4; and

$F_{4,H}$ = hydrogen flow to CSTR4.

Finally, the reaction rate $r_4$ and temperature $T_4$ of CSTR4 are obtained from the following equations, respectively:

$$r_4 = ahk_2 Pm_2 EXP(-E_A/RT_4)/N_2 \quad (16), \text{ and}$$
$$T_4 = T_B + f_1 r_4 Hrxn/(F_{4,0} C_0 + F_{4,H} C_H) \quad - \quad (17).$$

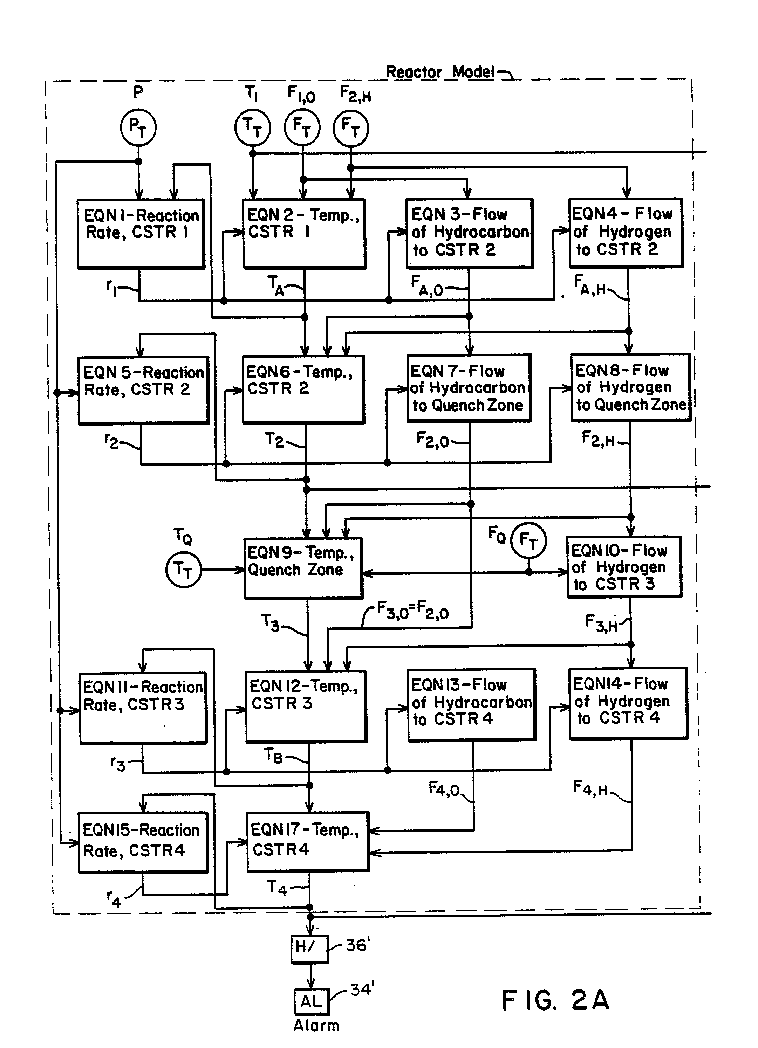

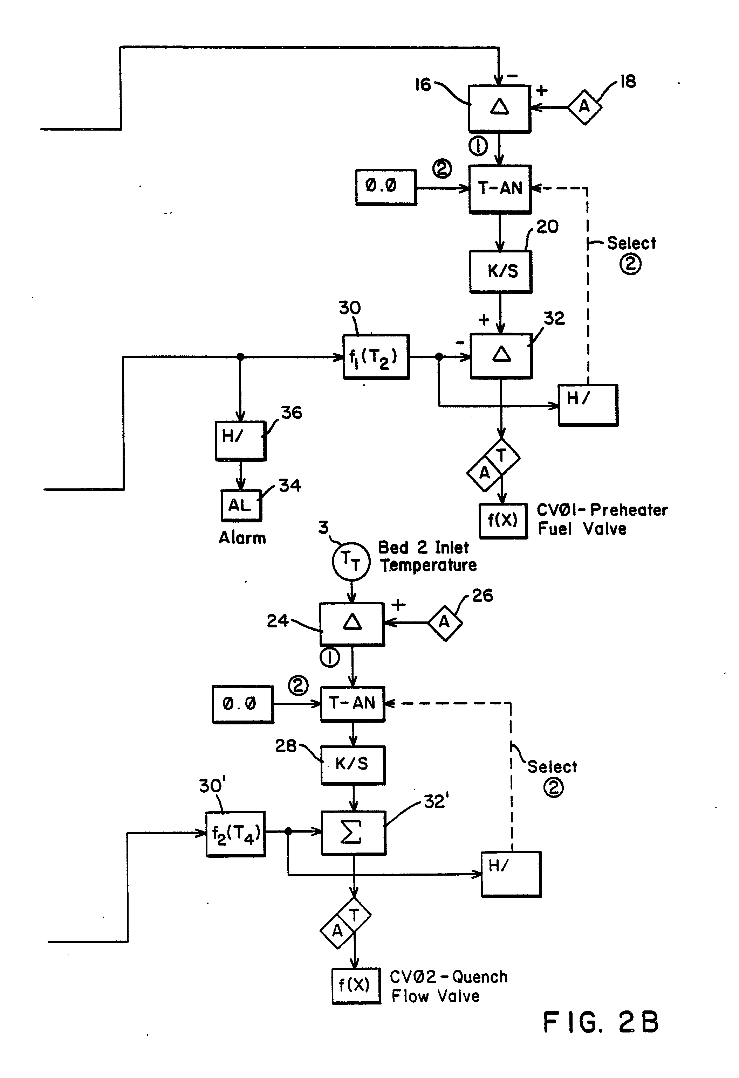

A schematic view of the control system embodying the invention is presented in Figure 2. Part of the system comprises a reactor model. The logical operations for implementing the reactor model, Equations (1) to (17), are simple additions, subtractions, multiplications, divisions, and exponentials. Therefore, the equations are presentated as "black boxes" (EQN1 to EQN17) with only the inputs and outputs identified.

Hydrocracker control systems presently in use are of the one element type wherein the rate of flow of fuel gas to a preheater is adjusted as required to maintain the feedstock temperature at the entrance to the hydrocracker at a predetermined set point value and wherein the rate of flow of hydrogen quench is adjusted as required to maintain the temperature of the throughput following the quench zone at a set point value. Thus, as shown in Figure 2, a signal proportional to the feedstock temperature $T_1$, generated in a tempera-

ture transmitter $T_T$, is transmitted to a difference unit 16 where it is compared to a set point signal generated in a manually adjustable unit 18, and the output difference signal, by means of a proportional plus integral unit 20, adjusts the valve CV01 as required to maintain the temperature $T_1$ at its set point value. In a similar control arrangement, a signal proportional to the throughput temperature at the inlet to CSTR3, generated in a temperature transmitter 3, is transmitted to a difference unit 24 where it is compared to a set point signal generated in a manually adjustable unit 26, and the output difference signal, by means of a proportional plus integral unit 28, adjusts the quench flow valve CV02 as required to maintain the throughput temperature at the inlet to CSTR3 at its set point value.

Such controls cannot react with sufficient speed to maintain set point values under upset reactor conditions. Even under normal conditions, because of thermal lag, transportation lag and the like, such controls easily become unstable, causing cycling reactor temperatures of ever-increasing amplitude, eventually resulting in an autoacceleration condition.

As shown in Figure 2, a signal proportional to $T_2$, the predicted bed 1 outlet temperature, is inputted to a function generator 30, an output signal from which is inputted to a difference unit 32. So long as the signal proportional to $T_2$ remains below a predetermined critical value the function generator 30 may be adjusted to null the output signal therefrom, whereas when the signal proportional to $T_2$ is above the critical value the function generator is adjusted to generate an output signal varying in desired linear or non-linear relationship to the input signal and hence effecting a decrease in fuel flow to the preheater 10. The signal proportional to $T_2$ is also arranged to activate an alarm 34 at a predetermined value established by a manually adjustable signal generator 36.

A similar control arrangement, responsive to a signal proportional to $T_4$, the predicted bed 2 tempeature, operates to adjust the valve CV02 to increase the flow of hydrogen to the quench zone 11 as required to inhibit autoacceleration of bed 2. This arrangement makes use of components 30', 32', 34' and 36' corresponding to the components 30, 32, 34 and 36 in the previously described arrangement.

The temperature controllers are prevented from moving in the incorrect direction when the outputs of their associated function generators 30, 30' are non-zero. This is accomplished by setting the controller error signals to zero upon a non-zero contribution from the function generators. The switching is carried out by analog transfer functions, denoted T-AN in Figure 2.

## Claims

1. An autoacceleration control system for an exothermic reactor, the system comprising means (Figure 2A) for generating a signal predicting reaction temperature ($T_2$; $T_4$) and means (CV01; CV02) under the control of said signal for adjusting the rate of application of a corrective agent to inhibit the exothermic process from producing excessive reactor temperature.

2. A control system according to claim 1, for an exothermic reactor which is a catalytic hydrocracker (6) into which, in use, feedstock is discharged, wherein said means (CV01) under the control of said signal ($T_2$) predicting reaction temperature is operative to adjust the temperature of feedstock discharged into the catalytic hydrocracker (6).

3. A control system according to claim 2, wherein the hydrocracker (6) is provided with a preheater (10) for the feedstock and said means under the control of said signal predicting reaction temperature (12) comprises means (CV01) for adjusting the rate of flow of a fuel (the corrective agent) to the preheater (10).

4. A control system according to claim 1, for an exothermic reactor which is a catalytic hydrocracker (6), wherein said means under the control of said signal predicting reaction comparative ($T_4$) comprises means (CV02) for adjusting the rate of flow of a coolant (the corrective agent) discharged into the hydrocracker (6).

5. A control system according to claim 4, wherein said coolant is hydrogen.

6. A method of controlling temperature autoacceleration in an exothermic reactor (6), which method includes computing (Figure 2A) a predicted reactor temperature ($T_2$; $T_4$) from feedstock flows, temperatures and pressures, generating a signal corresponding to the predicted reactor temperature ($T_2$; $T_4$), and adjusting the rate of application of a corrective agent in accordance with changes in said signal.

7. A method according to claim 6, wherein the corrective agent adjusts the temperature of feedstock flow into the reactor (6).

8. A method according to claim 6, wherein the corrective agent is a coolant introduced into the reactor (6) and the rate of flow thereof is adjusted in accordance with changes in said signal.

9. A method according to claim 6, claim 7 or claim 8, wherein the exothermic reactor (6) is a catalytic hydrocracker.

# FIG. 1
## REACTOR FLOWSHEET

$P_T$  $P_1$

$T_1$

$T_T$

Catalyst Bed 1

10

Preheater

CV01

Fuel Gas

Catalyst Bed 2

$T_Q$

$T_T$

$F_Q$

$F_T$

CV02

$\underline{11}$

V

$T_T$  3

Bed 2 Inlet Temperature

6

$T_2$

8

Heat Exchanger

14

Product

$F_{1,0}$

$F_T$

$F_{1,H}$

$F_T$

# FIG. 1A
## CONTINUOUS STIRRED TANK REACTOR MODEL

$T_1$ ,$F_{1,0}$ ,$F_{1,H}$

CSTR 1

Catalyst Bed 1

$T_A$ ,$F_{A,0}$ ,$F_{A,H}$

CSTR 2

$T_2$,$F_{2,0}$,$F_{2,H}$

$\underline{11}$  $\leftarrow F_Q$ ,$T_Q$

$T_3$ ,$F_{3,0}$ ,$F_{3,H}$

(note: $F_{3,0}=F_{2,0}$)

CSTR 3

Catalyst Bed 2

$T_B$ ,$F_{B,0}$,$F_{B,H}$

CSTR 4

$T_4$ ,$F_{4,0}$ ,$F_{4,H}$

FIG. 2A

FIG. 2B